Europäisches Patentamt

European Patent Office

Office européen des brevets

(11) Veröffentlichungsnummer: **0 322 878**
**A1**

# (12) EUROPÄISCHE PATENTANMELDUNG

(21) Anmeldenummer: 88121769.9

(22) Anmeldetag: 28.12.88

(51) Int. Cl.⁴: **B23K 35/30** , **B23K 35/368**

(30) Priorität: 29.12.87 US 138880

(43) Veröffentlichungstag der Anmeldung:
05.07.89 Patentblatt 89/27

(84) Benannte Vertragsstaaten:
AT BE CH DE ES FR GB GR IT LI LU NL SE

(71) Anmelder: THE LINCOLN ELECTRIC
COMPANY
22801 St. Clair Avenue
Cleveland, Ohio 44117(US)

(72) Erfinder: Crockett, Dennis Dell
7618 Mary Lane
Mentor, Ohio 44060(US)
Erfinder: Munz, Robert Philip
1817 Stumpville Road
Jefferson, Ohio 44047(US)

(74) Vertreter: Vollbach, Hans, Dipl.-Ing. et al
Patentanwälte Dipl.-Ing. Buschhoff Dipl.Ing
Hennicke Dipl.-Ing. Vollbach
Kaiser-Wilhelm-Ring 24
D-5000 Köln 1(DE)

(54) Abschmelzbare Schweisselektrode und Verfahren zur Verwendung derselben.

(57) Die Erfindung betrifft eine abschmelzende elektrische Lichtbogen-Schweißelektrode mit einem Elektroden-mantel aus Eisenmetall, wie insbesondere niedrig gekohltem Stahl, der um einen im wesentlichen konzentri-schen Kern aus komprimiertem pulverförmigem Füllstoff herumgeformt ist, wobei die Elektrode zur Ablagerung eines Schweißmetalls (Stahl) in mehreren Schweißlagen mit einer Mindest-Zugfestigkeit von etwa 72.000 psi und einer Mindest-Dehung von etwa 22 % bestimmt ist. Der Füllstoff weist Aluminium in einer Menge oberhalb etwa 1,5 % des Elektrodengewichts zur Erzielung eines angepaßten Aluminiumgehalts im abgelegten Schweißmetall auf. Der erfindungsgemäße Füllstoff umfaßt ferner Nickel und Mangan in Kombination und in einer Menge von 2,5 bis 4,0 Gew.-% der Gesamtelektrode, wobei der Nickelgehalt größer ist als etwa 0,5 % und der Mangangehalt im Bereich von 0,7 bis 2,0 Prozent liegt. Der Gehalt an Aluminium und Kohlenstoff im Füllstoff sind dabei so eingestellt, daß beim Aufschmelzen des Elektrodenmantels und des Füllstoffs das abgelegte Gesamtschweißme-tall Aluminium in einem Gehalt von über 1,2 Gew.-% und Kohlenstoff in einem Gehalt von weniger als etwa 0,12 % aufweist.

EP 0 322 878 A1

EP 0 322 878 A1

## Abschmelzbare Schweißelektrode und Verfahren zur Verwendung derselben

Die Erfindung bezieht sich auf das Elektroden-Lichtbogenschweißen und insbesondere auf eine verbesserte Elektrode und ein Verfahren zum offenen Lichtbogenschweißen an der Luft unter Verwendung einer selbstabschirmenden, sich aufbrauchenden Kernelektrode. Die Erfindung ist in ihrer Anwendung vor allem auf das offene Lichtbogenschweißen mit einer blanken Röhrchenelektrode gerichtet, bei der sich das Fluß- bzw. Schweißmittel, welches Legierungsmetalle sowie Schlacke-, Fluß- und Abschirmstoffe bildet, als körnige Füllung im Inneren des Röhrchens befindet.

Solche abschmelzbaren Elektroden sind als selbstabschirmende Elektroden in der Technik bekannt. Das von dem rohrförmigen, aus niedrig gekohltem Stahl bestehenden Metallmantel als Kern umschlossene Füllmaterial erzeugt Legierungselemente, um beim Aufschmelzen während des Lichtbogenschweißens ein Schweißmetall mit den gewünschten mechanischen Eigenschaften an der Schweißstelle zu erhalten. Die Erfindung bezieht sioh auf die Zusammensetzung des Legierungsmaterials innerhalb des den Elektrodenkern bildenden, von dem rohrförmigen Elektrodenmantel umschlossenen Füllmaterials. Dabei schließt die Erfindung eine selbstabschirmende, abschmelzende Kern- bzw. Röhrchenelektrode ein, bei der weiteres feinkörniges Schweiß- bzw. Zusatzmaterial zur Erzeugung des Fluß- und Abschirmeffektes in der Füllung enthalten ist. Dieses andere Material ist nicht Teil der vorliegenden Erfindung; es gehört auf dem Gebiet der Schweißelektroden zur Standardtechnologie. Das grundsätzliche Schlackensystem der früheren Elektroden wird bei der Herstellung der erfindungsgemäßen Elektrode nicht geändert.

Als Hintergrundinformation wird in diesem Zusammenhang Bezug genommen auf die US-A 3 767 891, um eine metallurgische Erscheinung zu erklären, die sich bei Elektroden der Type einstellt, deren Verbesserung die Erfindung bezweckt, die aber nicht mit der erfindungsgemäß verbesserten Elektrode gleichzusetzen ist.

Zur Herstellung von selbstabschirmenden, abschmelzenden Kernelektroden derjenigen Art, wie sie beim Schweißen mit mehreren Schweißdurchgangen bzw. mit mehreren Schweißlagen zur Bildung der Schweißraupe verwendet werden, ist es durch die Anmelderin bekannt geworden, daß das körnige Schweiß- bzw. Füllmaterial hinreichend Aluminium enthalten sollte, um die schädlichen Wirkungen, die mit dem Einschluß von Sauerstoff und Stickstoff im Schweißmetall während des Schweißprozesses verbunden sind, herabzusetzen. Durch Zugabe verhältnismäßig großer Mengen an Aluminium ergeben sich für die Elektrode auch Gebrauchserleichterungen, da sie in Bezug auf die Sauberkeit des zu schweißenden Stahles und das jeweils zur Anwendung kommende Schweißverfahren weniger empfindlich ist. Die Schweißraupe weist ein besseres Aussehen auf und ist bestandiger gegenüber Porosität. Infolgedessen wird dem Schweißzusatz bzw. dem Füllmaterial Legierungsaluminium in einer solchen Menge zugesetzt, daß der Aluminiumgehalt des abgelegten Schweißmetalles 1,20 % desselben wesentlich übersteigt. Allerdings hat ein solch hoher Aluminiumgehalt die Neigung, die Gefügeänderung der Schweißablage zu unterdrücken, mit der Folge, daß sich im Gefüge große Körner bilden, die die Duktilität des Schweißmetalls erheblich herabsetzen. Dies kann soweit geschehen, daß sich ein sprödes, brüchiges Schweißmetall bildet. Um dem zu begegnen, hat man in der Praxis als Legierungselement Kohlenstoff dem Schweißmaterial bzw. der Elektrodenfüllung zugesetzt, wodurch sich eine feinkörnige Gefügestruktur mit guter Streckbarkeit erreichen läßt. Elektroden derjenigen Art, auf welche die Erfindung gerichtet ist, enthielten demgemäß ein Kohlenstoff-Aluminium-System mit größtmöglichem Aluminiumgehalt von etwa 1,8 % des Gesamtschweißmetalls, wobei die durch das Aluminium an sich bewirkte Verminderung der Duktilität durch Erhöhung des Kohlenstoffgehalts im Gesamtschweißmetall auf ein Niveau, welches im allgemeinen zwischen 0,2 und 0,3 Gew.-% liegt, unterdrückt wurde. Die Abstimmung von Alumium und Kohlenstoff führt im Bezug auf die Duktikität zu einer zufriedenstellenden Schweißmetallablage. Der Aluminiumgehalt im Füllmaterial kann aber aus zwei Gründen einen oberen Grenzwert nicht übersteigen. Die Grenze des Aluminium-Kohlenstoff-Systems bestimmt sich aus der Notwendigkeit einer noch annehmbaren Duktilität des Schweißmetalls. Eine übermaßige Anhebung des Kohlenstoffgehalts führt hier aber zu einer Verminderung der Duktilität. Folglich lassen sich mit einem Kohlenstoff-Aluminium- System mit einem Aluminiumgehalt des Schweißmetalls oberhalb etwa 2,0 % normalerweise keine zufriedenstellenden Ergebnisse erreichen. Abgesehen von den Duktilitätsgrenzen eines solchen Legierungssystems hat die AMERICAN WELDING SOCIETY (AWS) die obere Grenze für den Aluminiumgehalt in dem abgelegten Schweißmetall bei einer Elektrode dieser Type mit 1,8 % festgesetzt. Dieser Aluminiumgehalt in der Gesamtschweißmetallablage entspricht im wesentlichen der Menge des Legierungsaluminiums, welches sich in dem die Füllung bzw. den Kern der Elektrode bildenden körnigen Zusatzmaterial befindet. Es besteht ein unmittelbarer Zusammenhang zwischen dem im Zusatz-bzw. Kernmaterial enthaltenen Aluminium, ausgedrückt als Prozentsatz der Elektrode einschließlich ihres Eisen-

2

bzw. Stahlmantels, und dem prozentualen Aluminiumgehalt des Gesamtschweißmetalls. Prozentangaben für das Aluminium können sich auf beides beziehen. Etwa 2 Gew.-% Aluminium in der Gesamtelektrode bedeutet im allgemeinen etwa 1,6 Gew.-% Aluminium im Gesamtschweißmetall. Dasselbe Verhältnis gilt im wesentlichen auch für andere Aluminiumanteile. Ein entsprechendes Verhältnis gilt auch für den Kohlenstoff bei einem Aluminium-Kohlenstoff-System in dem erfindungsgemäß zu verbessernden Elektrodenmaterial.

Die AMERICAN WELDING SOCIETY setzt die Forderungen für verschiedene selbstabschirmbare, abschmelzbare Elektroden fest, die zur Ablagerung von niedrig gekohltem Stahl bei Mehrfach-Schweißlagen verwendet werden. Eine der gebräuchlicheren Elektroden-Klassifikationen ist E 70 T-7, die die Forderung setzt, daß mit der Elektrode eine Schweißablagerung mit einer Mindest-Streckgrenze von 60.000 psi (4.218 kg/cm$^2$, einer Mindest-Zugfestigkeit von 72.000 psi (5.061,5 kg/cm$^2$) und einer Mindest-Dehnung von 22% erreicht wird. Dies ist in etwa die Normvorschrift für eine Elektrode der Type, auf welche sich die Erfindung bezieht. Um eine Elektrode, die diesen Forderungen entspricht, herzustellen, wurde das Aluminium-Kohlenstoff-System bisher so eingestellt, daß der erwünschte Vorteil des hohen Aluminiumgehalts von etwa 1,45% und vorzugsweise oberhalb etwa 1,50%, jedoch unter etwa 1,8% des Gesamtschweißmetalls bei einem geeigneten Kohlenstoffgehalt, im allgemeinen zwischen 0,24% und 0,28% des Gesamtschweißmetalls, erhalten wurde, um die gewünschte Duktilität zu erzielen. Der Nachteil einer solchen selbstabschirmenden, abschmelzbaren Kernelektrode besteht aber darin, daß die Kerbzähigkeit sehr niedrig ist, offensichtlich aufgrund der Karbide an den Korngrenzen, die sich bei Erhöhung des Kohlenstoffgehalts zum Zwecke der Verbesserung der Duktilität bilden. Außerdem ist die Ablagerungsgeschwindigkeit der Kernelektroden, die bisher nach der AWS-Vorschrift E 70 T-7 gefertigt wurden, verhältnismäßig groß. Bei hoher Schweißgutablagerungsgeschwindigkeit läßt sich eine verbesserte Kerbzähigkeit des abgelagerten Schweißmetalls schwieriger erreichen, und zwar aufgrund der zwangsläufig dickeren Schweißraupen und der verminderten prozentualen Kornverkleinerung bei aufeinanderfolgenden Schweißlagen zum Aufbau der Schweiße. Aus diesem Grund verlangt die AWS-Normvorschrift für die Elektroden der Type E 70 T-7 kein bestimmtes Niveau für die Kerbzähigkeit. Die Verwendung der Elektroden der Type E 70 T-7 war daher bisher weitgehend auf solche Anwendungsfälle beschränkt, bei denen keine Mindest-Kerbzähigkeit verlangt wurde.

Die vorliegende Erfindung bezieht sich auf eine Verbesserung einer selbstabschirmenden und sich selbst aufzehrenden bzw. abschmelzenden Kernelektrode, die ein auf Aluminiumbasis beruhendes Desoxydations- und Stickstoffspül-bzw. -reinigungssystem verwendet, um eine gute Beständigkeit gegenüber Porosität und eine Spannungsbereichscharakteristik mit vergleichsweise großem Aluminiumanteil im Kernmaterial aufweist, und daher sich durch verbesserte Duktilität und einen deutlichen Anstieg in der Kerbzähigkeit auszeichnet, die vorzugsweise den Wert von etwa 35 ft-lbs. bei 32° F auf der Charpy-V-Kerb-Skala übersteigt. Bei diesen vorteilhaften Eigenschaften der zur Ablagerung von Stahl in mehreren Schweißlagen oder Schweißgängen verwendeten Elektrode und den Vorteilen des hohen Aluminiumgehalts und dem deutlichen Anstieg in der Kerbzähigkeit soll eine hohe Ablagerungsgeschwindigkeit bei der erfindungsgemäßen Kernelektrode gewahrt bleiben. Der nach AWS maximale Aluminiumgehalt bei einem selbstabschirmenden System, auf welches die Erfindung gerichtet ist, beträgt 1,8% des Gesamtschweißmetalls und wird von dem im Füllstoff in einer maximalen Menge von etwa 2,3% der Elektrode (einschließlich ihres Metallmantels) nicht überschritten. Demgemäß erzeugt das Legierungssystem, auf welches die Erfindung gerichtet ist, einen Aluminiumgehalt im Gesamtschweißmetall, der 1,8% nicht übersteigt. Um die Schweißeigenschaften und weitere Vorteile eines solchen selbstabschirmenden Systems mit hohem Aluminiumgehalt zu wahren, wird das erfindungsgemäß verwendete Legierungsaluminium auf einem Niveau oberhalb etwa 1,5% der Gesamtelektrode gehalten, so daß das Gesamtschweißmetall mindestens etwa 1,20% Aluminium enthält. Vorzugsweise wird der Aluminiumgehalt in dem Kern- bzw. Füllstoff so eingestellt, daß das abgelagerte Schweißmetall mindestens 1,50% Aluminium enthält.

Erfindungsgemäß ist der Kohlenstoffgehalt in dem Legierungssystem gegenüber den bisher gebräuchlichen Legierungssystemen auf Kohlenstoff-Aluminiumbasis reduziert, wobei in Kombination Nickel und Mangan dem körnigen Füllstoff der Elektrode zugesetzt werden, um die Austenit- Bildung ohne das Entstehen von Gefügestrukturen zu fördern, die die Kerbzähigkeit des Gesamtschweißmetalls nachteilig beeinflussen. Demgemäß wird eine abschmelzbare Kernelektrode ohne äußere Schutzgasabschirmung geschaffen, die die Vorteile des hohen Aluminiumgehalts bei erhöhter Kerbzähigkeit aufweist. Dieses Ergebnis ist bei den seit Jahren gebräuchlichen selbstabschirmenden Systemen mit hohem Aluminiumgehalt für die Erzeugung von Stahlablagerungen in mehreren Schweißlagen überraschend. Durch Verminderung des Kohlenstoffgehalts im Legierungssystem wird die Karbidbildung im Korngrenzbereich offensichtlich vermindert, wodurch sich der Anstieg in der Kerbzähigkeit ergibt.

Erfindungsgemäß wird der Legierungs-Kohlenstoff im Füll-bzw. Zusatzstoff im allgemeinen auf ein Minimum reduziert. Die Verminderung des Kohlenstoffs im Legierungsanteil des Füllstoffes ergibt im Gesamtschweißmetall einen Kohlenstoffgehalt unter 0,12% und vorzugsweise unter 0,10%.

Die vorliegende Erfindung stellt die Verbesserung einer selbstabschirmenden Elektrode dar, bei der der Kohlen stoffgehalt im Legierungssystem des Feststoff-Füllmaterials so weit herabgesetzt ist, daß der im Metallmantel enthaltene Kohlenstoff im wesentlichen der einzige in der Elektrode zur Legierung des Schweißmetalls zur Verfügung stehende Kohlenstoff ist. Eine Kombination von Nickel und Mangan wird dem Legierungssystem des Füllstoffs in einer solchen Menge zugesetzt, daß der Nickel- und Mangangehalt der Gesamtelektrode etwa bei 2,5 bis 4,0 Gew.-% beträgt, wobei der Nickelgehalt größer ist als etwa 0,5 Gew.-% der Elektrode und der Mangangehalt im Bereich von 0,7 bis 2,0 Gew.-% der Elektrode liegt. Der Kohlenstoffgehalt im Kernmaterial bzw. im Füllstoff liegt üblicherweise unter 0,05%, was bedeutet, daß der Kohlenstoff im wesentlichen aus dem Füllstoff eliminiert ist.

Bei der Herstellung einer Elektrode mit einem solchen Legierungssystem des Füllmaterials weist das Gesamtschweißmetall einen Aluminiumgehalt von über 1,20 Gew.-% vorzugsweise über 1,50 Gew.-%, und einen Kohlenstoffgehalt von unter etwa 0,12 Gew.-%, vorzugsweise unter etwa 0,10 Gew.-% auf. Die Verwendung der Nickel- und Mangankombination im Legierungssystem des Füllmaterials bewirkt eine Schweißmetall-Kerbzähigkeit, wie sie bisher mit dem zur Anhebung der Duktilität verwendeten hohen Kohlenstoffgehalt im Füllstoff nicht erreichbar war. Dies stellt eine wesentliche Verbesserung gegenüber den bekannten selbstabschirmenden Kernelektroden dar.

Nach Vorstehendem liegt der Erfindung demgemäß vor allem die Aufgabe zugrunde, eine selbstabschirmende, aufzehrbare bzw. abschmelzbare Kernelektrode zu schaffen, die einen Füllstoff mit einem Legierungssystem verwendet, das einen hohen Aluminiumgehalt aufweist, so daß eine Schweißablagerung bzw. ein Schweißmetall von hoher Charpy-V-Kerbzähigkeit erreicht wird, die mindestens etwa 35 ft-lbs. bei 32° F beträgt. Weiterhin ist die Erfindung auf ein Ver fahren zum Mehrlagenschweißen unter Verwendung einer Elektrode der oben genannten Type gerichtet.

Die mit der Erfindung erzielte Elektrode hat Verwendungs-und Handhabungseigenschaften, die ihre Verwendung beim Schweißen unterschiedlich dicker Bleche und Platten im Maschinen- und Anlagenbau und bei sonstigen Bauwerken gestattet. Die Elektrode hat einen guten Einbrand, eine gute Schweißraupenform, eine gute Schlackenentfernung und eine glänzende Schweißnahtoberfläche, so daß sie für zahlreiche Anwendungsfälle beim Lichtbogenschweißen verwendbar ist. Die erfindungsgemäße Elektrode entspricht in ihrer Handhabung im wesentlichen der AWS-E 70 T-7-Elektrode. Sie unterscheidet sich aber von Elekroden dieser Type dadurch, daß sie ein Schweißmetall mit Schlagfestigkeitseigenschaften erzeugt, wie sie mit den bisher verwendeten Elektroden mit einem Kunststoff-Aluminium-Legierungssystem des Füllmaterials nicht erreicht werden konnten. In einem solchen System ist das metallische Aluminium der wichtigste Bestandteil, der durch Abführung von Stickstoff und Sauerstoff im Lichtbogen und im Schweißbad die selbstabschirmende Eigenschaft der Elektrode bewirkt. Elektroden der erfindungsgemäßen Art mit größeren Aluminiumgehalten haben tendenziell einen größeren Spannungsbereich, bessere Gebrauchseigenschaften und auch bessere Eigenschaften in Bezug auf Formgebung und Aussehen der Schweißnaht bzw. Schweißraupe. Die Erfindung bewahrt dabei die guten Gebrauchseigenschaften der bekannten Kohlenstoff-Aluminium- Legierungssysteme bei drastisch reduziertem Kohlenstoffanteil. Es werden nicht nur mäßige Charpy-V-Kerbeigenschaften mit Streckgrenzen ähnlich den bekannten Kohlenstoff-Aluminium-Legierungssystemen erreicht, sondern als zusätzlicher Vorteil eine Dehnung (in einem 0,505"-Zugkrafttest), wie sie bisher durch die Zugabe von Kohlenstoff zur Erhöhung der Duktilität nicht erreicht werden konnte.

Die Erfindung bezieht sich auf ein spezielles Legierungssystem, welches über den Zusatzwerkstoff bzw. das Füllmaterial an eine Elektrode der erfindungsgemäßen Type gebunden ist. Dieses Legierungssystem bewirkt, wie erwähnt, die verbesserte Kerbzähigkeit des Schweißmetalls. In der Vergangenheit war der Aluminiumgehalt der Schweißablagerung bei selbstabschirmenden, ein Fluß- bzw. Schweißmittel enthaltenden Kernelektroden mit guter Kerbzähigkeit durchweg kleiner als 1,20%. Mit der Erfindung kann mit einem gesteigerten Aluminiumgehalt bis zu 2,0% im Gesamtschweißmetall gearbeitet werden, wobei auch der Lichtbogen-Übergang und die Schweißnahtform verbessert, die Spritzwirkung vermindert und bei Wahrung der Beständigkeit gegenüber Porenbildung in der Schweißnaht der Spannungsbereich erweitert werden.

In den nachfolgenden Beispielen I, II und III sind verschiedene Elektroden der erfindungsgemäßen Art angegeben.

## BEISPIEL I

Eine abschmelzbare Elektrode wurde hergestellt, indem im Inneren einer Hülle bzw. eines Mantels aus niedriggekohltem Stahl ein Kern aus komprimiertem Kern-bzw. Füllstoffmaterial vorgesehen wurde, dessen Gewicht 18,5% des Elektroden-Gesamtgewichts betrug, wobei der Elektrodenmantel den restlichen Gewichtsanteil ausmachte. Der Mantel wies einen Kohlenstoffgehalt von etwa 0,05% seines Gewichts und einen Mangangehalt von etwa 0,35% seines Gewichts auf. Das Füllmaterial setzte sich wie folgt zusammen:

|   |   | % des Füllstoffs | % der Elektrode |
|---|---|---|---|
| 1. | Mangan-Metallpulver | 5,50 | 1,02 |
| 2. | Eisenpulver | 37,00 | 6,85 |
| 3. | Aluminium-Metallpulver | 11,00 | 2,04 |
| 4. | Nickel-Metallpulver | 8,10 | 1,50 |
| 5. | Fluß- und Abschirm-Bestandteile | 38,40 | 7,10 |

Diese Elektrode wurde mit einem Durchmesser von 3/32 inch hergestellt und zur Herstellung einer Stumpfnaht mit mehreren Schweißlagen in ebener Position bei 3/4 inch dicken Blechen aus Kohlenstoffstahl mit folgenden Schweißparametern verwendet:

Schweißdraht-Vorschubgeschwindigkeit: 150 inch/min.; Stromstärke: 325 A, Gleichstrom-Elektrode negativ; Lichtbogenspannung: 25 V; 1 1/2 inch Elektroden-Vorstand; Temperatur (interpass temperature): 300° F. Die Ablagerungsgeschwindigkeit betrug etwa 11,4 pounds an Schweißmetall je Stunde.

Bei diesem Test ergaben sich folgende mechanische Schweißeigenschaften sowie chemischen Zusammensetzungen:

| | |
|---|---|
| Streckgrenze: | 69.500 psi |
| Zugfestigkeit: | 84.700 psi |
| % Dehnung: | 26 % |
| Charpy-V-Kerb- und Stoßfestigkeit: | 46 ft-lbs bei + 32° F |
| | 31 ft-lbs bei 0° F |
| Chemische Zusammensetzung der Schweißablagerung: | 0,088 % Kohlenstoff |
| | 1,33 % Mangan |
| | 0,09 % Silizium |
| | 1,63 % Aluminium |
| | 1,41 % Nickel |

## BEISPIEL II

Die in Beispiel I angegebene Elektrode wurde wie folgt geändert:

|   |   | % des Füllstoffs | % der Elektrode |
|---|---|---|---|
| 1. | Mangan-Metallpulver | 3,40 | 0,68 |
| 2. | Manganoxid | 4,05 | 0,81 |
| 3. | Eisenpulver | 35,10 | 7,02 |
| 4. | Aluminium-Metallpulver | 11,30 | 2,26 |
| 5. | Nickel-Metallpulver | 8,10 | 1,62 |
| 6. | Fluß- und Abschirmbestandteile | 38,05 | 7,61 |

Im Beispiel II betrug die Menge des Füllstoffs bzw. Schweißmittels 20 % des Gesamtelektrodengewichts, während der Elektrodenmantel den restlichen Anteil des Elektrodengewichts ausmachte.

Unter Verwendung der Testmethode nach Beispiel I ergaben sich für die Elektrode nach Beispiel II folgende Werte:

| Streckgrenze: | 72.100 psi |
|---|---|
| Zugfestigkeit: | 85,900 psi |
| % Dehnung: | 28 % |
| Charpy-V-Kerb- und Stoßfestigkeit: | 43 ft-lbs bei + 32° F |
| | 24 ft-lbs bei - 20° F |
| Chemische Zusammensetzung der Schweißablagerung: | 0,079 % Kohlenstoff |
| | 1,47 % Mangan |
| | 0,16 % Silizium |
| | 1,55 % Aluminium |
| | 1,60 % Nickel |

## BEISPIEL III

Die Elektrode nach Beispiel I wurde wie folgt geändert:

| | | % des Füllstoffs | % der Elektrode |
|---|---|---|---|
| 1. | Manganoxid | 4,05 | 0,84 |
| 2. | Eisenpulver | 38,50 | 7,97 |
| 3. | Aluminium-Metallpulver | 11,30 | 2,34 |
| 4. | Nickel-Metallpulver | 8,10 | 1,68 |
| 5. | Fluß- und Abschirmbestandteile | 38,05 | 7,88 |

Im Beispiel III betrug der Anteil des Füllstoffs bzw. Schweißmittels am Gesamtgewicht der Elektrode 20,7 % und des Elektrodenmantel den Rest.

Unter Verwendung der Testmethode nach Beispiel I ergaben sich für die Elektrode nach Beispiel III folgende Werte:

| Streckgrenze: | 63.600 psi |
|---|---|
| Zugkraft: | 78.400 psi |
| % Dehnung: | 24 % |
| Charpy-V-Kerb- und Schlagfestigkeit: | 51 ft-lbs bei + 32° F |
| | 34 ft-lbs bei 0° F |
| Chemische Zusammensetzung der Schweißablagerung: | 0.082 % Kohlenstoff |
| | 0.98 % Mangan |
| | 0,16 % Silizium |
| | 1,76 % Aluminium |
| | 1,63 % Nickel |

Aus diesen drei vorgenannten Beispielen und weiteren Testversuchen ergibt sich, daß bei Verwendung eines Feststoff-Füllmaterials bzw. eines Schweißmittels in einer solchen Zusammensetzung, daß ein Elektroden-Legierunssystem der erfindungsgemäßen Art erhalten wird (Nickel-Mangan-Kombination im Bereich von 2,5 bis 4,0 Gew.-% der Elektrode, wobei der Nickelgehalt größer ist als 0,5 Gew.-% der Elektrode und der Mangangehalt im Bereich von 0,7 bis 2,0 Gew.-% der Elektrode liegt, bei gleichzeitiger Begrenzung des Kohlenstoffgehalts in der Elektrode in der Weise, daß der Kohlenstoffgehalt in dem Gesamtschweißmetall 0,12 Gew.-% nicht übersteigt), die Forderungen der AWS-Standardvorschriften für eine E 70 T-7-Elektrode bezüglich Zugfestigkeit und Dehnung erreicht werden in Verbindung mit einer Kerbzähigkeit (Charpy-V-Kerbe), die oberhalb 35 ft-lbs bei 32° F liegt.

Die bevorzugten Bereiche der wirksamen Elemente in dem Gesamtschweißmetall nach der vorliegenden Erfindung sind:

|  | % Gesamt-Schweißmetall |
|---|---|
| a) Kohlenstoff | 0,06 bis 0,10 |
| b) Mangan | 1,0 bis 1,5 |
| c) Aluminium | 1,40 bis 1,75 |
| d) Nickel | 1,4 bis 2,0 |

Es versteht sich, daß andere Metallrückstände, wie Phosphorbestandteile (maximal 0,02 %) und Schwefelbestandteile (maximal 0,01 %) ebenfalls in dem abgelagerten Schweißmetall zu finden waren, da sie sich aus dem im Schweißbereich vorhandenen Stahl des Schweißsystems sowie aus gewissen reduzierbaren Verbindungen des Schlackensystems ergeben.

Bei den genannten Beispielen wurde das Mangan teilweise von dem im Füllstoff enthaltenen Manganoxid geliefert, welches in Pulverform leicht zur Verfügung steht. Es versteht sich, daß Nickel und Mangan auch in einer Form vorhanden sein können, die durch das Aluminium zu elementarem Nickel und Mangan als Legierungselement für das Schweißme tall reduziert werden kann. Der Kohlenstoffgehalt im Elektroden Füllstoff und im Stahlmantel der Elektrode wird erfindungsgemäß so eingestellt, daß er im Gesamtschweißmetall den Wert von 0,12 Gew.-%, vorzugsweise einen Wert unter 0,10 Gew.-% des Schweißmetalls nicht übersteigt. Das Aluminium im Füllstoff wird durch pulvriges Aluminium geliefert; sein Anteil liegt uber 1,50 Gew.-% und unter 2,5 Gew.-% der Elektrode. Dies bedeutet, daß das Schweißmetall im allgemeinen einen Aluminiumgehalt in der Größenordnung von 1,2 bis 2,0 Gew.-% aufweist.

Nach einem weiteren Aspekt ist die Erfindung auf ein Ver fahren zum elektrischen Lichtbogenschweißen an der Luft (ohne äußere Schutzgaszuführung) in einem oder auch in mehreren Schweißdurchgängen bzw. Schweißlagen mit Hilfe einer sich selbst schützenden und aufzehrenden Kernelektrode der genannten Beschaffenheit gerichtet. Diese Elektrode kann eine Ablagerungsgeschwindigkeit oberhalb etwa 10 pounds/Stunde mit einer Zähigkeit (Charpy-V-Kerbmethode) von mindestens 35 foot-pounds bei 32° F aufweisen. Das Verfahren umschließt als einzelne Schritte das Herstellen des Stahlmantels der Elektrode mit einem Kohlenstoffgehalt von mindestens etwa 0,06 Gew.-% der Elektrode und das Einbringen des Schweißmittels bzw. Füllstoffs in den Hüllmantel zur Bildung eines Elektroden-Legierungssystems, das in Kombination Nickel und Mangan in Anteilen von 2,5 bis 4 Gew.-% der Elektrode (Nickelgehalt größer als 0,5 Gew.-% der Elektrode und Mangangehalt im Bereich von 0,7 bis 2 Gew.-%) umfaßt. Das Legierungsaluminium wird, wie erwähnt, in einem Niveau oberhalb etwa 1,5 Gew.-% der Gesamtelektrode gehalten, während der Kohlenstoffanteil im Elektrodenmantel und im Füllstoff insgesamt kleiner ist als etwa 0,15 Gew.-% der Elektrode, so daß das beim Aufschmelzen der Elektrode abgelagerte Schweißmetall einen Aluminium-Legierungsgehalt oberhalb etwa 1,2 Gew.-% und einen Kohlenstoffgehalt unterhalb etwa 0,12 Gew.-% aufweist. Das Verfahren umschließt ferner die Durchleitung eines elektrischen Stroms durch die Elektrode zur Erzeugung eines elektrischen Lichtbogens, der den Elektrodenmantel und das Kern- bzw. Füllstoffmaterial aufschmilzt und das Elektrodenmetall auf das Werkstück unter Bildung eines Gesamtschweißmetalls mit mindestens 1,20 % Aluminium und unterhalb 0,12 Gew.-% Kohlenstoff. Bei Anwendung dieser Methode lassen sich Ablagerungsgeschwindigkeiten erheblich oberhalb 10 pounds/Stunde beim Mehrlagenschweißen unter Erfüllung der Forderung der AWS-Standardvorschrift E 70 T-7 bezüglich Zugfestigkeit und Duktilität erreichen, zugleich die Stoß-bzw. Schlagfestigkeit auf einen Wert oberhalb 35 ft- lbs (Charpy-V-Kerbmethode bei 32° F) einstellen.

Der Füllstoff umfaßt Legierungsbestandteile, Flußmittel und Abschirmbestandteile, wobei der erstgenannte Bestandteil entsprechend der Erfindung gegenüber den herkömmlichen vergleichbaren Elektroden geändert wird. Bei den Beispielen zeigt sich, daß der Füllstoff Eisenpulver enthält, das eine weitere Quelle für Eisen in der Schweiße bildet und das nicht einen Teil der vorgenannten drei Füllstoff-Bestandteile ist.

## Ansprüche

1. Selbstabschirmende, abschmelzbare elektrische Lichtbogen-Schweißelektrode mit einem Elektrodenmantel aus Eisenmetall, der einen etwa konzentrischen Kern aus komprimiertem körnigen Füllstoff umschließt, zur Ablage eines Gesamt-Stahl-Schweißmetalls in Mehrfach-Schweißlagen mit einer Mindest- Zugfestigkeit von etwa 72.000 psi und einer Mindest-Dehnung von etwa 22 %, wobei der Füllstoff Aluminium in einer Menge von mehr als etwa 1,5 % des Elektroden-Gesamtgewichts enthält, **dadurch gekennzeichnet**, daß der Füllstoff einen kombinierten Nickel- und Mangangehalt im Bereich von 2,5 bis 4,0 % des Elektroden-Gesamtgewichts enthält, wobei der Nickelgehalt größer ist als etwa 0,5 % und der Mangangehalt im Bereich von 0,7 bis 2,0 % liegt, und daß der Kohlenstoffgehalt im Füllstoff so begrenzt ist, daß das beim Aufschmelzen des Elektrodenmantels und des Füllstoffs abgelegte Gesamtschweißmetall einen Kohlenstoffgehalt von nicht mehr als 0,12 Gew.-% aufweist.

2 Elektrode nach Anspruch 1, **dadurch gekennzeichnet,** daß das Nickel in dem Füllstoff zumindest teilweise in Form von NiX vorliegt, wobei X aus einem oder mehreren im elektrischen Lichtbogen vom Aluminium reduzierbaren Elementen besteht.

3 Elektrode nach Anspruch 1 oder 2, **dadurch gekennzeichnet,** daß das Mangan im Füllstoff zumindest teilweise in Form von MnX vorliegt, wobei X aus einem oder mehreren vom Aluminium im elektrischen Lichtbogen reduzierbaren Elementen besteht.

4. Elektrode nach einem der Ansprüche 1 bis 3, **dadurch gekennzeichnet,** daß die Festigkeit des Gesamtschweißmetalls (nach der Charpy-V-Kerb-Methode) mindestens 35 ft-lbs. bei 32° F beträgt.

5. Elektrode nach einem der Ansprüche 1 bis 4, **dadurch gekennzeichnet,** daß der Gehalt an Aluminium in dem Füllstoff größer ist als 1,5 und kleiner ist als etwa 2,5 Gew.-% (bezogen auf das Gesamtgewicht der Elektrode).

6. Elektrode nach einem der Ansprüche 1 bis 5, **dadurch gekennzeichnet,** daß der Gehalt an Kohlenstoff des Elektrodenmantels und des Füllstoffs so eingestellt ist, daß das gebildete Gesamtschweißmetall einen Kohlenstoffgehalt unter 0,12 Gew.-% aufweist.

7. Elektrode nach einem der Ansprüche 1 bis 6, **dadurch gekennzeichnet,** daß der Kohlenstoffgehalt des Gesamtschweißmetalls unter 0,10 Gew.-% liegt.

8. Elektrode nach einem der Ansprüche 1 bis 7, **dadurch gekennzeichnet,** daß der Gehalt an Kohlenstoff im Elektrodenmantel und im Füllstoff so eingestellt ist, daß der Kohlenstoffgehalt des Gesamtschweißmaterials den Wert von 0,12 Gew.-% des Gesamtschweißmetalls nicht übersteigt.

9. Verfahren zum elektrischen Lichtbogenschweißen an der Luft mit mehreren Schweißlagen unter Verwendung einer sich selbst abschirmenden, aufzehrbaren Kernelektrode und mit einer Ablagerugsgeschwindigkeit oberhalb 10 pounds/Stunde mit einer Kerbzähigkeit von mindestens 35 ft-lbs. bei 32° F, **gekennzeichnet durch** folgende Schritte:

a) Herstellen eines Elektrodenmantels mit einem Kohlenstoffgehalt von mindestens etwa 0,06 Gew.-% der Elektrode;

b) Einbringen eines Füllstoffs in den Mantel mit einem kombinierten Nickel- und Mangangehalt im Bereich von 2,5 bis 4,0 Gew.-% der Gesamtelektrode, wobei der Nickelgehalt größer ist als etwa 0,5 % und der Mangangehalt im Bereich von 0,7 bis 2,0 % liegt, und mit einem Gehalt an Kohlenstoff in der Elektrode, der so abgestimmt ist, daß er im Gesamtschweißmetall nicht mehr als 0,12 Gew.-% beträgt, und mit Alumnium im Füllstoff, dessen Gehalt nicht niedriger liegt als etwa 1,50 Gew.-% der Gesamtelektrode;

c) Durchleiten eines elektrischen Stromes durch die Elektrode zur Bildung eines elektrischen Lichtbogens zum Aufschmelzen des Elektrodenmantels und des Kern-Füllstoffs zur Ablage derselben auf ein Werkstück unter Bildung eines Schweißmetalls mit mindestens 1,20 % Aluminium und mit weniger als etwa 0,12 % Kohlenstoff (Gew.-%).

**Europäisches Patentamt**

# EUROPÄISCHER RECHERCHENBERICHT

Nummer der Anmeldung

EP 88 12 1769

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 194 526 (UNION CARBIDE)<br>* Beispiele 2,4 *<br>--- | 1,3-9 | B 23 K 35/30<br>B 23 K 35/368 |
| X | GB-A-1 090 049 (MUREX)<br>* Beispiel 4; Ansprüche *<br>--- | 1,5,9 | |
| X | DE-A-2 164 892 (NIPPON STEEL)<br>* Beispiele 3,4; Vergleichbeispiel Seite 31 *<br>--- | 1,4-9 | |
| A,D | FR-A-2 139 865 (LINCOLN ELECTRIC)<br>--- | 1,4-9 | |
| A | PATENT ABSTRACTS OF JAPAN, Band 7, Nr. 269 (M-259)[1414], 30. November 1983; & JP-A-58 148 095 (KOBE SEIKOSHO K.K.) 03-09-1983<br>--- | 2,3 | |
| A | DE-A-1 910 267 (KOBE STEEL)<br>----- | | |

**RECHERCHIERTE SACHGEBIETE (Int. Cl.4)**

B 23 K

Der vorliegende Recherchenbericht wurde für alle Patentansprüche erstellt

| Recherchenort | Abschlußdatum der Recherche | Prüfer |
|---|---|---|
| DEN HAAG | 06-04-1989 | MOLLET G.H.J. |